# EUROPEAN PATENT SPECIFICATION

(11) **EP 3 058 449 B1**
(45) Date of publication and mention of the grant of the patent: **08.07.2020**
(21) Application number: 14853298.9
(22) Date of filing: 10.10.2014
(51) Int. Cl.: H04N 21/431, H04N 21/422, H04N 5/58, H04N 5/445, G06F 3/048, G06F 3/14, H04N 21/4223, G09G 5/00, G06F 3/147

(54) **DISPLAY DEVICE AND CALIBRATION METHOD THEREOF**
ANZEIGEVORRICHTUNG UND KALIBRIERUNGSVERFAHREN DAFÜR
DISPOSITIF D'AFFICHAGE ET SON PROCÉDÉ D'ÉTALONNAGE

(30) Priority: 17.10.2013 CN 201310489339; 13.01.2014 KR 20140003881
(43) Date of publication of application: 24.08.2016
(73) Proprietor: Samsung Electronics Co., Ltd., Gyeonggi-do 16677 (KR)
(72) Inventor: ZHOU, Engao, Nanjing 210000 (CN); TANG, Ziwen, Nanjing 210000 (CN)
(74) Representative: Walaski, Jan Filip
(86) International application number: PCT/KR2014/009532
(87) International publication number: WO 2015/056932

(56) References cited:
- WO-A1-2012/119494
- WO-A1-2013/148566
- CN-A- 101 957 712
- CN-A- 102 869 078
- CN-U- 202 133 993
- CN-Y- 201 196 775
- US-A1- 2009 046 106
- US-A1- 2009 298 547
- US-A1- 2010 075 649
- US-A1- 2011 234 540
- SHAOJIE ZHUO ET AL: "On the Recovery of Depth from a Single Defocused Image", 2 September 2009 (2009-09-02), COMPUTER ANALYSIS OF IMAGES AND PATTERNS, SPRINGER BERLIN HEIDELBERG, BERLIN, HEIDELBERG, PAGE(S) 889 - 897, XP019137370, ISBN: 978-3-642-03766-5 * abstract *

## Description

### Technical Field

Apparatuses and methods consistent with exemplary embodiments relate to a display apparatus and a control method thereof, and more particularly, to a display apparatus and a control method thereof for generating and displaying a background image that is consistent with a background environment.

### Background Art

Existing large screen systems, e.g., home smart televisions (TVs), tablet personal computers (PC), public electronic bulletin boards, and navigator systems in shopping centers display a black screen when they are turned off, even though receiving power, and this is not harmonious with the ambient environment.

Chinese Patent Application No. 200820001556.2 discloses a terminal that has a dynamic background screen generator including a background screen storage portion, a background screen collection portion, a dynamic background screen monitor and a dynamic background screen controller.

The background screen storage portion is used to store background screen information therein. The background screen information collection portion is used to collect the content that has been searched on a current browse window as the background screen information and registers the content with the dynamic background screen controller, in response to a user s command. The dynamic background screen controller is used to give start/stop commands for generating and outputting a dynamic background screen, receives information of collection of the background screen information collection portion, and notifies the update of the content of the dynamic background screen monitor. If the dynamic background screen controller notifies the update of the content of the dynamic background screen monitor, the dynamic background screen monitor sequentially extracts the background screen information from the desktop container, and generates a dynamic background screen based on the extracted information, and generates and outputs the dynamic background screen by outputting the dynamic background screen to a handset monitor according to a command from the dynamic desktop controller.

Chinese Patent Application CN 102869078 A discloses a portable device simulating a transparent display by capturing and displaying an image of from the back of the device. Images are updated when mobile moves and the newly captured image is determined to be different. Images are compared using grey values.

Chinese Patent Application CN 101957712 A discloses a portable device simulating a transparent display by capturing and displaying an image of from the back of the device. The images are updated when mobile moves and filter effects are applied to the image before being displayed.

Document WO 2013148566 A discloses discarding images for processing if they are blurred or out of focus.

### Disclosure of Invention

### Technical Problem

However, the Chinese Patent Application no. 200820001556.2 uses the content searched from the current browse window as the background screen information and generates a dynamic background screen through the dynamic background screen controller. This cannot be applied to a large screen system, because this will not be consistent with the ambient environment. Thus, there is a need to provide methods and apparatuses for generating a background screen in a large screen system, to provide consistency of the background screen with the ambient environment.

### Solution to Problem

One or more exemplary embodiments may provide a display apparatus and a control method thereof, in which a photograph at a rear side of the display apparatus is taken so that it is consistent with a background environment and is displayed as the background image when a screen of the display apparatus is turned off while power is supplied to the display apparatus.

According to an aspect of an exemplary embodiment, there is provided a display apparatus including: an image obtainer configured to photograph images; an image processor configured to process the photographed images; a display; and a controller configured to determine one of the photographed images that satisfies a preset condition and is within a predetermined range, as a background image, to control the image processor to process the determined background image corresponding to an image effect that has been transmitted to the controller regarding the background image, and to control the display to display the processed background image.

The controller may compare at least one of a depth of field of a subject, location data and image quality data of the photographed images with the preset condition.

The display apparatus may further include a storage device configured to store the photographed images, wherein the controller analyzes a most recently photographed rear image of the display, and determines the most recently photographed rear image as the background image when no stored image is consistent with the analysis results and within the predetermined range.

The controller may obtain data regarding at least one of a location of the display apparatus, a brightness of the display apparatus, and a depth of field of a subject, by using the most recently photographed rear image.

The controller may change the background image if at least one of the location of the display apparatus, the brightness of the display apparatus, and the depth of field of the subject is changed by a predetermined value or more.

The controller may analyze a most recently photographed rear image of the display and generates an analysis result, and changes a brightness setting of the display if the analysis result is equal to or exceeds a predetermined value.

The controller may determine the depth of field of the subject based on a degree of clarity of the photographed image, respectively.

The image obtainer may include image obtaining modules which are provided at different locations to photograph an ambient environment around the display in at least one of a front direction, a rear direction, and a lateral direction of the display.

The controller may control the image obtainer to continuously or periodically photograph an ambient environment of the display apparatus.

The controller may store the determined background image corresponding to the preset condition item.

According to an aspect of another exemplary embodiment, there is provided a control method of a display apparatus, the method including: photographing images of an ambient environment of the display apparatus; determining one of the photographed images that satisfies a preset condition and is within a predetermined range, as a background image; receiving an input of an image effect for the background image; processing the determined background image corresponding to the received image effect; and displaying the processed background image.

The determining the background image may include comparing at least one of a depth of field, location data and image quality data of the photographed images, with the preset condition.

The determining the background image may include analyzing a most recently photographed image and generating an analysis result; and determining the most recently photographed image as the background image if no stored image is consistent with the analysis result and is within a predetermined range.

The analyzing may include obtaining data regarding at least one of a location of the display apparatus, a brightness of the display apparatus, and a depth of field of a subject, by using the most recently photographed image.

The determining the background image may include changing the background image if at least one of the location of the display apparatus, the brightness of the display apparatus, and the depth of field of the subject is changed by a predetermined value or more.

The determining the background image may include analyzing a most recently photographed image and generating an analysis result; and changing a brightness setting of the display if the analysis result is equal to or exceeds a predetermined value.

The comparing with the preset condition may include determining the depth of field of a subject based on a degree of clarity of a most recently photographed image.

The photographing may include photographing the ambient environment of the display apparatus continuously or periodically.

The determining the background image may include storing the determined background image corresponding to the preset condition.

According to an aspect of another exemplary embodiment, there is provided a display apparatus including: an image obtainer configured to capture images of a scene surrounding a display; an image processor configured to process the captured images; a controller configured to determine that one of the captured images as a background image and configured to receive an input of an image effect; and a display configured to display the background image processed by the image processor to correspond to the image effect.

The controller may be configured to control the image obtainer to capture a rear image of the scene disposed behind the display apparatus, and the display is configured to display the rear image as the background image, thereby displaying the scene obstructed by the display apparatus.

According to an aspect of an exemplary embodiment, the display apparatus and the control method may photograph an image of the background environment, process the image and display the processed image as the background image that is consistent with the background environment.

### Advantageous Effects of Invention

The present invention is conceived to solve the above-described problems, an aspect of which is to provide a display device and a calibration method thereof for photographing a rear image that is consistent with a background environment and for displaying the rear image as the background image when a screen of the display device is turned off while power is supplied to the display device.

### Brief Description of Drawings

The above and/or other aspects will become more apparent by describing certain exemplary embodiments, with reference to the accompanying drawings, in which:
FIG. 1 is a schematic view of a display apparatus according to an exemplary embodiment;
FIG. 2 illustrates a detailed example of the display apparatus according to an exemplary embodiment;
FIG. 3 illustrates an image obtainer of the display apparatus according to an exemplary embodiment;
FIG. 4 illustrates an example of an installation location of the image obtainer according to an exemplary embodiment;
FIG. 5 is a flowchart showing a control method according to an exemplary embodiment;
FIG. 6 is a block diagram of a display apparatus according to an exemplary embodiment;
FIG. 7 is a block diagram of a display apparatus according to an exemplary embodiment;
FIG. 8 is a control flowchart showing operations of the display apparatus according to an exemplary embodiment; and
FIG. 9 is a control flowchart showing operations of the display apparatus according to an exemplary embodiment.

### Best Mode for Carrying out the Invention

Certain exemplary embodiments are described in greater detail below with reference to the accompanying drawings.

In the following description, the same drawing reference numerals are used for the same elements even in different drawings. The matters defined in the description, such as detailed construction and elements, are provided to assist in a comprehensive understanding of exemplary embodiments. Thus, it is apparent that exemplary embodiments can be carried out without those specifically defined matters. Also, well-known functions or constructions are not described in detail since they would obscure exemplary embodiments with unnecessary detail.

An exemplary embodiment relates to a large screen system including a display that may display a background image consistent with the ambient environment.

The large screen system according to an exemplary embodiment is equipment that is not very mobile. For example, the large screen system includes a home smart TV, tablet PC, public electronic bulletin board, or a navigator system at a shopping center or the like.

The background environment of the large screen system according to an exemplary embodiment is compared to a large screen system. The ambient environment, i.e., surroundings, located in front of the large screen system is called a front environment, and the ambient environment, i.e., surroundings, located behind the large screen system is called a background environment.

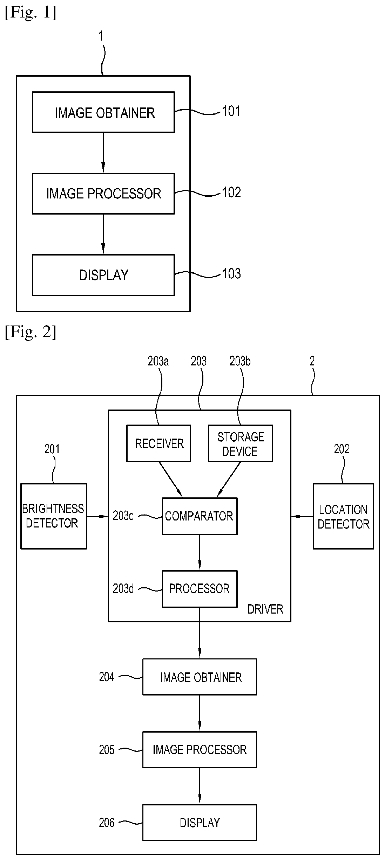

FIG. 1 is block diagram of the display apparatus 1 according to an exemplary embodiment. The display apparatus 1 may be included in the large screen system and may generate a dynamic background screen reflecting an image of the ambient environment or the surroundings of the display apparatus.

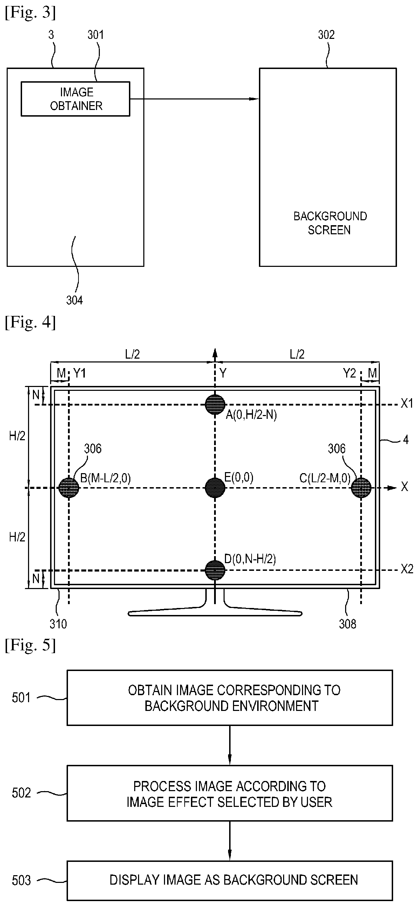

An image obtainer 101 collects images corresponding to the background environment of the display apparatus 1 when it is connected to the display apparatus 1. FIG. 3 illustrates the image obtainer of the display apparatus.

In an exemplary embodiment, the image obtainer 101 may be installed in a rear side of the display apparatus 1. The installation location is described in more detail below. The image obtainer 101 according to an exemplary embodiment may include a webcam or another device that may photograph an image. For example, if the image obtainer 101 is a webcam, the webcam is open and changed to a camera mode, adjusts its focus and gives a photographing effect and has such effect that is similar to human eyes after being removed from the large screen system. Then, an aperture is adjusted so that the brightness of the image that has been photographed most recently is consistent with the ambient environment. Lastly, the webcam photographs and obtains an image.

The image processor 102 is used to process the obtained image according to the image effect selected by a user. The image effect selected by a user may include oil painting, embossing, plastering, drawing, and other effects. For example, if the image effect selected by a user is oil painting, the image processor 102 processes the image collected by the image obtainer 101 into an oil painting type.

The display 103 is used to display the image processed by the image processor 102 as a background screen of the display apparatus 1.

FIG. 1 briefly illustrates the display apparatus according to an exemplary embodiment. Hereinafter, the display apparatus according to an exemplary embodiment is described in more detail.

FIG. 2 illustrates a detailed example of a display apparatus according to an exemplary embodiment. As shown therein, the display apparatus 2 in FIG. 2 may further include other elements, in addition to the elements shown in FIG. 1.

A driver 203 is used to drive an image collected by an image obtainer 204 corresponding to the ambient environment of the display apparatus 2.

The display apparatus 2 may be controlled by a user installation module (not shown), according to a user s instruction. That is, a user may control the driving of the display apparatus 2 through the user installation module.

The driver 203 drives the image obtainer 204 to collect an image corresponding to the background environment of the display apparatus 2 when the user installation module controls the driving of the display apparatus 2 according to the user s instruction.

A location detector 202 transmits location data of the display apparatus 2 to the driver 203 when a change in the location of the display apparatus 2 is detected. The location detector 202 monitors the change in the location of the display apparatus 2 at a time interval or in real-time.

A brightness detector 201 transmits brightness data of the display apparatus 2 to the driver 203 when the brightness of the display apparatus 2 is changed. The brightness detector 201 monitors the change in the brightness of the display apparatus 2 at a time interval or in real-time.

The driver determines whether to obtain the images by the image obtainer 204 corresponding to the ambient environment of the display apparatus 2 according to the data of the display apparatus 2 and the brightness data of the display apparatus 2 transmitted by the brightness detector 201.

The location detector 202 according to an exemplary embodiment transmits current location data of the display apparatus 2 to the driver 203 when a distance between the display apparatus 2 and a fixed structure exceeds a preset value. If the distance between the display apparatus 2 and the fixed structure exceeds the preset value, the brightness detector 201 transmits current brightness data of the display apparatus 2 to the driver 203.

The fixed structure includes a wall or a facility that is not mobile. At least one of the location detector 202 and the brightness detector 201 according to an exemplary embodiment may determine the distance between the display apparatus 2 and the fixed structure in excess of the preset value as set forth below.

The image obtainer 204 obtains a depth of field of a subject that is set currently.

The image obtainer 204 obtains the depth of field of the current subject based on the image collected by the image obtainer 204. The depth of field of the subject determines whether the image collected by the image obtainer 204 is clear or unclear. In general, if a collected image is clear, the depth of field of the subject is large. If the collected image is unclear, the depth of field of the subject is small.

It is determined whether the obtained depth of field is a minimum depth of field of the subject. If yes, it is determined that the distance between the display apparatus 2 and the fixed structure is within the set distance. If no, the distance between the display apparatus 2 and the fixed structure exceeds the set distance.

The driver 203 according to an exemplary embodiment may determine whether to drive the image obtainer 204 that collects images corresponding to the display apparatus 2 as follows.

A receiver 203a receives location data of the display apparatus 2 that has been detected by the location detector 202 and receives brightness data of the display apparatus 2 that has been transmitted by the brightness detector 201.

A comparator 203c compares whether a difference between the location data of the display apparatus 2 and the set location data exceeds a location change value if no prior location data are stored in a storage device 203b. The current location data that is received by the receiver 203a is stored in the storage device.

If the storage device 203b stores prior location data, the current location data that is received by the receiver 203a is compared with the stored location data to determine whether the difference between the prior location data and the current location data exceeds the location change value. The prior location data stored in the storage device 203b is updated on the basis of the current location data received by the receiver 203a.

If no prior brightness data of the display apparatus 2 is stored in the storage device 203b, the current brightness data received by the receiver 203a is compared with the set brightness data to determine whether the difference between the current brightness data and the set brightness data exceeds the brightness change value. The current brightness data of the display apparatus 2 received by the receiver 203a is stored in the storage device 203b.

If the prior brightness data is stored in the storage device 203b, the current brightness data received by the receiver 203a is compared with the stored brightness data to determine whether the difference between the prior brightness data and the current brightness data exceeds the brightness change value. The prior brightness data stored in the storage device 203b is updated on the basis of the current brightness data received by the receiver 203a.

The processor 203d determines whether to obtain the image corresponding to the ambient environment of the display apparatus 2 based on following conditions:
(1) If the difference between the current location data of the display apparatus 2 received by the receiver 203a and the set location data exceeds the location change value;
(2) If the difference between the current brightness data of the display apparatus 2 received by the receiver 203a and the set brightness data exceeds the brightness change value;
(3) If the difference between the current location data of the display apparatus 2 received by the receiver 203a and the location data stored in the storage device 203b exceeds the location change value; or
(4) If the difference between the current brightness data of the display apparatus 2 received by the receiver 203a and the brightness data stored in the storage device 203b exceeds the brightness change value.

If the above-described conditions are not met, the image obtainer 204 does not obtain the image corresponding to the ambient environment of the display apparatus 2.

FIG. 3 illustrates an image obtainer 301 disposed on a rear surface 304 of the display apparatus 3 and providing a background screen 302 reflecting an image of the surroundings of the display apparatus.

With reference to FIGS. 3 and 4, the location of the image obtainer 301 of the display apparatus 3 is determined as follows:

If a single image obtainer is used, the image obtainer 301 may be installed at a rear side 304 of the display apparatus 3 in any location in the X-Y coordinate environment; however, this is not limiting. The image obtainer may be installed at any portion of the display apparatus 3 or in any location of immediate vicinity of the display apparatus 3.

If the image obtainer 301 includes two image obtaining modules 306, the image obtaining modules 306 may be installed in symmetric B and C locations in the left and right sides of the display apparatus 3, or in symmetric A and D locations on the top and bottom.

If the image obtainer 301 includes three image obtaining modules 306, the image obtaining modules 306 may be installed in three locations in the X-Y coordinate environment.

In the X-Y coordinate environment, a horizontal line is an X axis, and a vertical line is a Y axis.

A location E refers to an intersection of the X axis and the Y axis.

Locations A and D refer to two symmetric locations that are H/2-N away from the location E in the Y axis.

Locations B and C refer to two symmetric locations that are L/2-M away from the location E in the X axis.

L and H refer to length and height, respectively, of the display apparatus 3.

M is the shortest distance from a horizontal boundary 308 for an installation location of the image obtainer 301, and is greater than 0 and is equal to or smaller than L/2.

N is the shortest distance from a vertical boundary 310 for an installation location of the image obtainer 301, and is greater than 0 and is equal to or smaller than H/2.

Hereinafter, a method of controlling the display apparatus of FIGS. 1 to 4 is described with reference to FIG. 5. FIG. 5 is a flowchart showing a method of generating a dynamic background screen according to an exemplary embodiment.

The image obtainer collects images corresponding to the background environment of the display apparatus when it is connected to the display apparatus (operation 501).

The image processor processes the collected images according to the image effect selected by a user (operation 502).

The display displays the image processed by the image processor, as the background screen of the display apparatus (operation 503).

At operation 501, the image obtainer is driven by the driver 203 to collect images corresponding to the background environment of the display apparatus.

In driving the image obtainer according to a user s command, the driver 203 executes the driving by the controller, or executes the driving based on the location data of the display apparatus transmitted by the location detector 202 and the brightness data of the display apparatus transmitted by the brightness detector 201.

For example, if a smart TV has a black screen after a user sets the smart TV at home, the overall view of the home is not very fine and the background environment of the smart TV is not seen. This obstructs the visual effect for a user.

In an exemplary embodiment described above with reference to FIGS. 1 to 5, if a user turns on the display apparatus including the smart TV, the image obtainer, e.g., the webcam, photographs the background environment of the smart TV, obtains the image, and the image processor processes the image according to the image effect selected by a user.

The display displays the image processed by the image processor, as the background screen of the display apparatus. That is, instead of the displayed black screen as in the related art, the background screen of the smart TV is the image processed by the image processor. If a user relocates the smart TV and the change in location exceeds the location change value, or if there is a change in brightness of the smart TV in the morning, at noon or in the evening, and such change exceeds the brightness change value, the image obtainer photographs the background environment of the smart TV again, obtains the image and generates a new background screen.

If the display apparatus, described above with reference to FIGS. 1 to 5, includes a navigator at a shopping center or a public place, and a user turns on the navigator, the image obtainer, e.g., the webcam, of the navigator photographs a background environment of the navigator and obtains an image, and the image processor processes the image according to the image effect selected by a user. The display displays the image processed by the image processor, as the background screen of the display apparatus. That is, instead of the displayed black screen as in the related art, the background screen of the navigator is the image processed by the image processor. If a user relocates the navigator and the change in location exceeds the location change value, or if there is change in brightness of the navigator in the morning, at noon or in the evening, and such change exceeds the brightness change value, the image obtainer photographs the background environment of the navigator again and obtains an image and generates a new background screen.

Thus, the display apparatus displays the processed background image as the background screen of the large screen system. The display apparatus displays the background screen that is consistent with the ambient environment and enables a user to view the background image of the display apparatus and helps a user to view a virtual transparent screen. That is, a user may view the background image, i.e., the image of an area disposed behind the display apparatus. If the display apparatus is relocated or brightness exceeds a predetermined range, the image obtainer collects an image again and updates the background screen.

In FIGS. 1 to 5, the display apparatuses 1, 2, and 3, the image obtainers 101, 204, and 301, the image processors 102 and 205, and the displays 103 and 206 may have substantially similar or the same configuration. However, for purpose of convenience, the same configurations have different reference numerals in drawings.

The configurations in FIGS. 1, 2, 3, 6, and 7 may correspond to each other as follows.

The display apparatuses 1, 2, and 3 may correspond to display apparatuses 6 and 7. Thus, the corresponding elements of the display apparatuses 1, 2, 3, 6, and 7 may have substantially similar or the same constructions, functions, and purposes, the repeated descriptions of which are omitted below. However, this is not limiting, and at least some of the distinctions of the display apparatuses 6 and 7 are described in detail below and may be applicable to corresponding elements of the display apparatuses 1, 2, and 3 described above with reference to FIGS. 1 to 5.

For example, image obtainers 101, 204, and 301 may correspond to image obtainers 601 and 701.

The image processors 102 and 205 may correspond to image processors 602 and 702.

The displays 103 and 206 may correspond to displays 603 and 703.

The storage device 203b may correspond to a storage device 706.

The driver 203 may correspond to a part of controllers 604 and 705.

The receiver 203a may correspond to a part of a communicator 704.

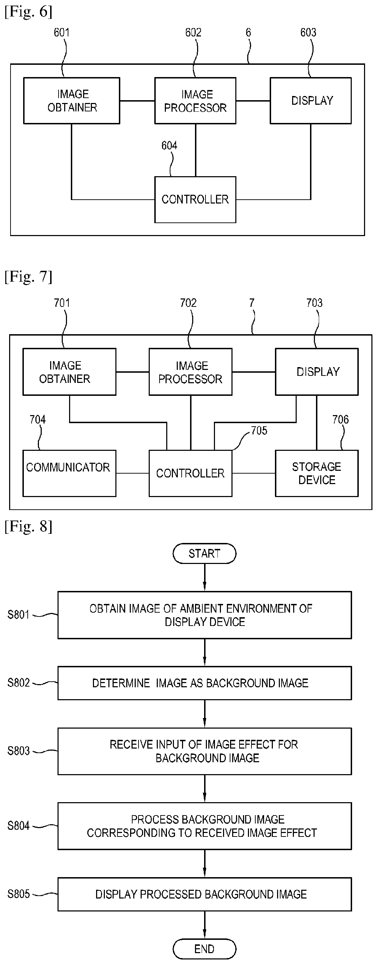

Although the brightness detector and the location detector are not illustrated in FIGS. 6 and 7, the brightness detector and the location detector corresponding to the brightness detector 201 and the location detector 202, respectively, may be further added as separate elements or as being embodied in controller 604 or 705.

FIG. 6 is a block diagram of a display apparatus 6 according to an exemplary embodiment. The display apparatus 6 may include an image obtainer 601, an image processor 602, a display 603 and a controller 604.

The image obtainer 601 may be implemented as a camera to photograph a rear side, front side, or lateral side of the display apparatus 6 and, thus, obtain an image of the surroundings of the display apparatus 6.

The image processing operations of the image processor 602 includes, without limitation, de-multiplexing for dividing a predetermined signal into signals by nature; decoding corresponding to an image format of image signals; de-interlacing for converting interlace image signals into progressive image signals; noise reduction for improving image quality; detail enhancement; frame refresh rate conversion, etc. The image processor 602 may include a decoder (not shown) to decode a source image corresponding to an image format of an encoded source image, and a frame buffer (not shown) to store therein a decoded source image per frame.

The image processor 602 may include a system-on-chip (SoC) which integrates the aforementioned functions, or as an image processing board (not shown) that is formed by installing individual elements or modules performing the aforementioned processes on a printed circuit board (PCB) to be installed in the display apparatus 6.

The image processor 602 processes a broadcast signal including an image signal transmitted by a receiver (not shown), and a source image including an image signal supplied by an image supply source (not shown). The image processor 602 may output the processed image signal to the display apparatus 6 so that the display apparatus 6 may display a processed source image.

The display 603 may display an image based on an image signal output by the image processor 602. The display 603 may include, without limitation, a liquid crystal display (LCD), a plasma display (PD), a light-emitting diode (LED) display, an organic light-emitting diode (OLED) display, a surface-conduction electron-emitter display (SED), a carbon nanotube display, and a nanocrystal display. If the display 603 includes LCD, PD, or OLED, to display an image, the display 603 may include an LCD panel, a PD panel or an OLED panel, respectively.

The display 603 may further include additional elements. For example, the display 603 which includes an LCD may include an LCD panel, a backlight unit emitting light to the LCD panel and a driving substrate driving the LCD panel.

The display 603 may display an image and a color calibration process. The display 603 may include a display panel to display an image, and a panel driver to process an input image signal and display an image on the display panel, however, an exemplary embodiment is not limited thereto. An image signal that is provided by an external input source through an interface (not shown) may be decoded, de-interlaced and scaled to be displayed on the display 603. The controller 604 may perform color calibration according to a user's command, and the display 603 may display a color calibration process including color patch and color calibration window.

The controller 604 may control operations of the display apparatus 6, may determine one of photographed images as a background image if such determined image satisfies preset conditions and is within a predetermined range, and if an input of the image effect for the background image is received, may control the image processor 602 to process the determined background image corresponding to the received image effect and may control the display 603 to display the processed background image.

FIG. 7 is a block diagram of a display apparatus 7 according to an exemplary embodiment. The display apparatus 7 according to an exemplary embodiment may include the same configuration as in FIG. 6, and may further include a storage device 706 and a communicator 704.

The storage device 706 may include a writable ROM in which data remain even upon cutoff of power to the display apparatus 7. However, the storage device 706 may further include at least one of a flash memory, an erasable programmable read only memory (EPROM) and an electrically erasable programmable read only memory (EEPROM).

The communicator 704 may receive a signal from an external input and transmit the signal to the image processor 702 or to the controller 705. The communicator 704 may receive a signal from an external input in a wired manner when various external input cables are connected thereto, or may receive a wireless signal according to preset wireless communication standards.

The communicator 704 may include a plurality of connectors (not shown) to which respective cables are individually connected. The communicator 704 may receive signals from connected external input cables, e.g., may receive broadcast signals, image signals or data signals according to standards such as high definition multimedia interface (HDMI), universal serial bus (USB) or component video.

The communicator 704 may further include various additional elements such as a wireless communication module (not shown) for wireless communication or a tuner (not shown) to tune a broadcast signal depending on a design type of the display apparatus 7 as well as elements for receiving signals and/or data from an external input. The communicator 704 may transmit information, data, and/or signals of the display apparatus 7 to an external device as well as receiving signals from an external device. That is, the communicator 704 is not limited to the element for receiving signals from an external device, and may also be implemented as an interface for interactive communication. The communicator 704 may receive a control signal from a plurality of control devices to select a user interface (UI). The communicator 704 may include a communication module for near field communication (NFC) such as Bluetooth, infrared (IR), ultra wideband (UWB) and Zigbee, or a communication port for wired communication. The communicator 704 may be used for various purposes including transmission and reception of commands for manipulating a display and of data in addition to a control signal for selecting a UI.

The controller 705 may compare at least one of a depth of field of a photographed image, location data and image quality data with a preset condition.

The controller 705 may control the image obtainer to obtain a rear image and may analyze a rear image, i.e., an image of the surroundings of the background environment of the display 703. If none of the stored prior images is consistent with the analysis result and is within a predetermined range, the currently obtained rear image may be determined as a background image and may be stored. If there is a stored image which is consistent with the location and brightness data and the depth of field and is within the predetermined range, the stored image may be determined as a background image and may be displayed.

The controller 705 may obtain data of at least one of the location and brightness of the display apparatus 7 and the depth of field of the subject by using the photographed rear image. The data of at least one of the location and brightness of the display apparatus 7 and the depth of field of the subject may be obtained through the brightness and location detectors, described above with reference to FIG. 2, and/or by analyzing the photographed image.

If at least one of the location and brightness of the display apparatus 7 and the depth of field of the subject is changed by a predetermined range or more, the controller 705 may change the background image. If the background image displayed by the display apparatus 7 does not correspond to the current time and state, the controller 705 may change the background image. The controller 705 may analyze the photographed rear image of the display 703 and generate analysis result. If the analysis result of the photographed rear image is equal to or exceeds the predetermined range, the controller 705 may change the brightness setting of the display 703.

The controller 705 may determine the depth of field of the subject based on the degree of clarity of the photographed image. If the photographed image is clear, it is an image of a close background of the display apparatus 7. If the photographed image is unclear, it is an image of a distant background.

The image obtainer 701 may include multiple image obtaining modules, as described above with reference to FIGS. 2 to 5, to photograph the surroundings of the display apparatus 7 in at least one of front, rear and lateral directions of the display 703. The image obtaining modules may be able to take photographs in corresponding directions, i.e., in at least one of front, rear and lateral directions of the display 703.

The controller 705 may control the image obtainer 701 to continuously or periodically photograph the ambient environment of the display apparatus 7.

The controller 705 may store the determined background image corresponding to the preset condition item.

FIG. 8 is a control flowchart showing operations of the display apparatus 6 according to an exemplary embodiment.

The image of the ambient environment of the display apparatus is photographed (operation S801).

If one of the photographed images satisfies the preset condition and is within the predetermined range, the image is determined as a background image (operation S802).

The input of the image effect for the background image is received (operation S803).

The determined background image is processed corresponding to the received image effect (operation S804).

The processed background image is displayed on the display 603 (operation S805).

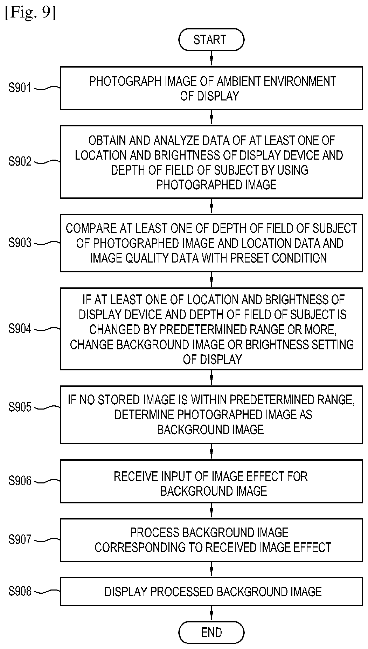

FIG. 9 is a control flowchart showing operations of the display apparatus 7 according to an exemplary embodiment.

The image of the ambient environment of the display apparatus 7 is photographed (operation S901). The controller 705 may control the image obtainer 701 to continuously or periodically photograph the ambient environment of the display apparatus 7.

The data of at least one of the location and brightness of the display apparatus 7 and the depth of field of the subject is obtained by using the photographed rear image, and the obtained data are analyzed (operation S902).

At least one of the depth of field of the photographed image, the location data and the image quality data is compared with a preset condition (operation S903). The depth of field of the subject may be determined on the basis of the degree of clarity of the photographed image.

If at least one of the location and brightness of the display apparatus 7 and the depth of field of the subject is changed by a predetermined range or more, the background image or the brightness setting of the display 703 is changed (operation S904).

If no stored image is within the predetermined range, the rear image is determined as the background image (operation S905). The controller 705 may store the determined background image corresponding to the preset condition item.

The input of the image effect for the background image is received (operation S906).

The determined background image is processed corresponding to the received image effect (operation S907).

The processed background image is displayed on the display 703 (operation S908).

The display apparatuses 1, 2, 3, 6, and 7 may photograph images of rear and lateral sides thereof. Thus, even if the display apparatuses 1, 2, 3, 6 and 7 are turned off and have a black screen while receiving power, the background image may be displayed consistently with the background environment.

As described above, the display apparatus and the control method thereof according to exemplary embodiments may photograph an image of the background environment, process the image and display the processed image as the background image that is the same as or consistent with the background environment.

The described-above exemplary embodiments and advantages are merely exemplary and are not to be construed as limiting. The present teaching can be readily applied to other types of apparatuses. The description of exemplary embodiments is intended to be illustrative, and not to limit the scope of the claims, and many alternatives, modifications, and variations will be apparent to those skilled in the art.

## Claims

1. A display apparatus comprising:
a display (703);
an image obtainer (701) configured to photograph the environment behind the display (703);
an image processor (702) configured to process the obtained images;
a controller (705) configured to select one of the obtained images as a background image, to receive an input of an image effect for the background image, to control the image processor (702) to process the selected background image corresponding to the image effect, and to control the display (703) to display the processed background image;
a driver (203) for driving the image obtainer (701); and
a location detector (202) arranged to transmit current location information of the display apparatus to the driver (203) in response to a change in the location of the display apparatus being detected or in response to a distance between the display apparatus and a fixed structure exceeding a preset value;
wherein the driver (203) is arranged to drive the image obtainer (701) to obtain a most recent image in response to a difference between the current location information of the display apparatus and stored location information of the display apparatus exceeding a predetermined threshold, and
a storage device (706) configured to store the obtained images,
wherein the controller (705) is arranged to analyze the most recent image, and to select the most recent image as the background image in response to there being no stored image having a depth of field of a subject within a predetermined range that is consistent with the analysis result of the most recent image.

2. The display apparatus of claim 1, wherein the controller is further arranged to compare at least one of location data of the display apparatus and image quality data of the most recent image with at least one preset condition in selecting the most recent image as the background image.

3. The display apparatus of claim 1, wherein the controller is arranged to obtain data regarding at least one of a location of the display apparatus, a brightness of the ambient environment of the display apparatus, and a depth of field of a subject, by using the most recent image.

4. The display apparatus of claim 1, wherein the controller is arranged to change the background image if the depth of field of the subject is changed by a predetermined value or more.

5. The display apparatus of claim 1, wherein the controller is further arranged
to change a brightness setting of the display if the analysis result shows that a difference between the brightness of the most recent image and the brightness of the background image is equal to or exceeds a predetermined value.

6. The display apparatus of claim 1, wherein the controller is arranged to determine the depth of field of the subject based on a degree of clarity of the obtained images.

7. The display apparatus of claim 1, wherein the image obtainer (701) further comprises image obtaining modules which are provided at different locations to photograph an ambient environment around the display in at least one of a front direction, a rear direction, and a lateral direction of the display.

8. The display apparatus of claim 1, wherein the controller (705) is arranged to control the image obtainer (701) to continuously or periodically photograph an ambient environment of the display apparatus.

9. The display apparatus of claim 1, wherein the controller is arranged to store the selected most recent image as the background image.

10. A control method of a display apparatus, the method comprising:
photographing the environment behind the display apparatus;
storing the obtained images;
selecting one of the obtained images as a background image;
receiving an input of an image effect for the background image;
processing the selected background image corresponding to the received image effect; and
displaying the processed background image, further comprising:
receiving current location information of the display apparatus from a location detector (202) in response to a change in the location of the display apparatus being detected or in response to a distance between the display apparatus and a fixed structure exceeding a preset value;
obtaining a most recent image in response to a difference between the current location information and stored location information exceeding a predetermined threshold; and
analyzing the most recent image, and selecting the most recent image as the background image in response to there being no stored image having a depth of field of a subject within a predetermined range that is consistent with the analysis result of the most recent image.

11. The control method of claim 10, further comprising:
comparing at least one of location data of the display apparatus and image quality data of the most recent image with a preset condition in selecting the most recent image as the background image.

12. The control method of claim 10, wherein the analyzing comprises:
obtaining data regarding at least one of a location of the display apparatus, a brightness of the ambient environment of the display apparatus, and a depth of field of a subject, by using the most recent image.

13. The control method of claim 10, comprising:
changing the background image if the depth of field of the subject is changed by a predetermined value or more.

## Patentansprüche

1. Anzeigevorrichtung, die Folgendes umfasst:
ein Display (703);
einen Bildbeschaffer (701), konfiguriert zum Fotografieren der Umgebung hinter dem Display (703);
einen Bildprozessor (702), konfiguriert zum Verarbeiten der beschafften Bilder;
eine Steuerung (705), konfiguriert zum Auswählen eines der beschafften Bilder als Hintergrundbild, zum Empfangen eines Eingangs eines Bildeffekts für das Hintergrundbild, zum Steuern des Bildprozessors (702) zum Verarbeiten des gewählten Hintergrundbilds entsprechend dem Bildeffekt und zum Steuern des Display (703) zum Anzeigen des verarbeiteten Hintergrundbildes;
einen Treiber (203) zum Ansteuern des Bildbeschaffers (701); und
einen Standortdetektor (202), ausgelegt zum Übertragen aktueller Standortinformationen der Anzeigevorrichtung zum Treiber (203) als Reaktion darauf, dass eine Änderung des Standorts der Anzeigevorrichtung erkannt wird, oder als Reaktion darauf, dass eine Entfernung zwischen der Anzeigevorrichtung und einer festen Struktur einen voreingestellten Wert übersteigt;
wobei der Treiber (203) zum Ansteuern des Bildbeschaffers (701) aufgelegt ist, um ein jüngstes Bild als Reaktion darauf zu beschaffen, dass eine Differenz zwischen den aktuellen Standortinformationen der Anzeigevorrichtung und gespeicherten Standortinformationen der Anzeigevorrichtung einen vorbestimmten Schwellenwert übersteigt, und
ein Speichergerät (706), konfiguriert zum Speichern der beschafften Bilder,
wobei die Steuerung (705) zum Analysieren des jüngsten Bildes und zum Auswählen des jüngsten Bildes als Hintergrundbild als Reaktion darauf ausgelegt ist, dass es kein gespeichertes Bild mit einem Tiefenfeld eines Subjekts in einem vorbestimmten Bereich gibt, das mit dem Analyseergebnis des jüngsten Bildes übereinstimmt.

2. Anzeigevorrichtung nach Anspruch 1, wobei die Steuerung ferner zum Vergleichen von Standortdaten der Anzeigevorrichtung und/oder Bildqualitätsdaten des jüngsten Bildes mit wenigstens einer voreingestellten Bedingung beim Auswählen des jüngsten Bildes als Hintergrundbild ausgelegt ist.

3. Anzeigevorrichtung nach Anspruch 1, wobei die Steuerung zum Beschaffen von Daten in Bezug auf wenigstens eines aus einem Standort der Anzeigevorrichtung, einer Helligkeit der Umgebung der Anzeigevorrichtung und einem Tiefenfeld eines Subjekts anhand des jüngsten Bildes ausgelegt ist.

4. Anzeigevorrichtung nach Anspruch 1, wobei die Steuerung zum Ändern des Hintergrundbildes ausgelegt ist, wenn das Tiefenfeld des Subjekts um einen vorbestimmten Wert oder mehr geändert wird.

5. Anzeigevorrichtung nach Anspruch 1, wobei die Steuerung ferner ausgelegt ist zum
Ändern einer Helligkeitseinstellung des Display, wenn das Analyseergebnis zeigt, dass eine Differenz zwischen der Helligkeit des jüngsten Bildes und der Helligkeit des Hintergrundbildes genauso groß wie oder größer als ein vorbestimmter Wert ist.

6. Anzeigevorrichtung nach Anspruch 1, wobei die Steuerung zum Bestimmen des Tiefenfeldes des Subjekts auf der Basis eines Grades der Klarheit der beschafften Bilder ausgelegt ist.

7. Anzeigevorrichtung nach Anspruch 1, wobei der Bildbeschaffer (701) ferner Bildbeschaffungsmodule umfasst, die an verschiedenen Orten vorgesehen sind, um eine Umgebung um das Display herum in wenigstens einer aus einer vorderen Richtung, einer hinteren Richtung und einer seitlichen Richtung des Display zu fotografieren.

8. Anzeigevorrichtung nach Anspruch 1, wobei die Steuerung (705) zum Steuern des Bildbeschaffers (701) ausgelegt ist, um eine Umgebung der Anzeigevorrichtung kontinuierlich oder periodisch zu fotografieren.

9. Anzeigevorrichtung nach Anspruch 1, wobei die Steuerung zum Speichern des gewählten jüngsten Bildes als Hintergrundbild ausgelegt ist.

10. Steuerverfahren für eine Anzeigevorrichtung, wobei das Verfahren Folgendes beinhaltet:
Fotografieren der Umgebung hinter der Anzeigevorrichtung;
Speichern der beschafften Bilder;
Auswählen eines der beschafften Bilder als Hintergrundbild;
Empfangen eines Eingangs eines Bildeffekts für das Hintergrundbild;
Verarbeiten des gewählten Hintergrundbildes entsprechend dem empfangenen Bildeffekt; und
Anzeigen des verarbeiteten Hintergrundbildes, das ferner Folgendes beinhaltet:
Empfangen aktueller Standortinformationen der Anzeigevorrichtung von einem Standortdetektor (202) als Reaktion darauf, dass eine Änderung des Standorts der Anzeigevorrichtung erkannt wird, oder als Reaktion darauf, dass eine Entfernung zwischen der Anzeigevorrichtung und einer festen Struktur einen voreingestellten Wert übersteigt;
Beschaffen eines jüngsten Bildes als Reaktion darauf, dass eine Differenz zwischen den aktuellen Standortinformationen und gespeicherten Standortinformationen eine vorbestimmte Schwelle übersteigt; und
Analysieren des jüngsten Bildes und Auswählen des jüngsten Bildes als Hintergrundbild als Reaktion darauf, dass es kein gespeichertes Bild mit einem Tiefenfeld eines Subjekts innerhalb eines vorbestimmten Bereichs gibt, das mit dem Analyseergebnis des jüngsten Bildes übereinstimmt.

11. Steuerverfahren nach Anspruch 10, das ferner Folgendes beinhaltet:
Vergleichen von Standortdaten der Anzeigevorrichtung und/oder Bildqualitätsdaten des jüngsten Bildes mit einer voreingestellten Bedingung beim Auswählen des jüngsten Bildes als Hintergrundbild.

12. Steuerverfahren nach Anspruch 10, wobei das Analysieren Folgendes beinhaltet:
Beschaffen von Daten über wenigstens eines aus einem Standort der Anzeigevorrichtung, einer Helligkeit der Umgebung der Anzeigevorrichtung und einem Tiefenfeld eines Subjekts anhand des jüngsten Bildes.

13. Steuerverfahren nach Anspruch 10, das Folgendes beinhaltet:
Ändern des Hintergrundbildes, wenn das Tiefenfeld des Subjekts um einen vorbestimmten Wert oder mehr geändert wird.

## Revendications

1. Appareil d'affichage comportant :
un dispositif d'affichage (703) ;
un dispositif d'obtention d'image (701) configuré pour photographier l'environnement derrière le dispositif d'affichage (703) ;
un processeur d'image (702) configuré pour traiter les images obtenues ;
un dispositif de commande (705) configuré pour sélectionner l'une des images obtenues comme image d'arrière-plan, recevoir une entrée d'un effet d'image pour l'image d'arrière-plan, commander le processeur d'image (702) à des fins de traitement de l'image d'arrière-plan sélectionnée correspondant à l'effet d'image, et commander le dispositif d'affichage (703) à des fins d'affichage de l'image d'arrière-plan traitée ;
un pilote (203) servant à piloter le dispositif d'obtention d'image (701) ; et
un détecteur d'emplacement (202) agencé pour transmettre des informations d'emplacement en cours de l'appareil d'affichage au pilote (203) en réponse à un changement de l'emplacement de l'appareil d'affichage qui est détecté ou en réponse à une distance entre l'appareil d'affichage et une structure fixe dépassant une valeur prédéfinie ;
dans lequel le pilote (203) est agencé pour piloter le dispositif d'obtention d'image (701) pour obtenir une image la plus récente en réponse à une différence entre les informations d'emplacement en cours de l'appareil d'affichage et des informations d'emplacement stockées de l'appareil d'affichage dépassant un seuil prédéterminé, et
un dispositif de stockage (706) configuré pour stocker les images obtenues,
dans lequel le dispositif de commande (705) est agencé pour analyser l'image la plus récente, et pour sélectionner l'image la plus récente comme image d'arrière-plan en réponse à ce qu'il n'y a aucune image stockée ayant une profondeur de champ d'un sujet dans les limites d'une plage prédéterminée qui correspond au résultat d'analyse de l'image la plus récente.

2. Appareil d'affichage selon la revendication 1, dans lequel le dispositif de commande est par ailleurs agencé pour comparer au moins des données parmi des données d'emplacement de l'appareil d'affichage et des données de qualité d'image de l'image la plus récente par rapport à au moins une condition prédéfinie pour sélectionner l'image la plus récente comme image d'arrière-plan.

3. Appareil d'affichage selon la revendication 1, dans lequel le dispositif de commande est agencé pour obtenir des données concernant au moins l'un parmi un emplacement de l'appareil d'affichage, une luminosité de l'environnement ambiant de l'appareil d'affichage, et une profondeur de champ d'un sujet, en utilisant l'image la plus récente.

4. Appareil d'affichage selon la revendication 1, dans lequel le dispositif de commande est agencé pour changer l'image d'arrière-plan si la profondeur de champ du sujet est changée selon une valeur prédéterminée ou plus.

5. Appareil d'affichage selon la revendication 1, dans lequel le dispositif de commande est par ailleurs agencé
pour changer un réglage de luminosité du dispositif d'affichage si le résultat d'analyse montre qu'une différence entre la luminosité de l'image la plus récente et la luminosité de l'image d'arrière-plan est égale à une valeur prédéterminée ou dépasse celle-ci.

6. Appareil d'affichage selon la revendication 1, dans lequel le dispositif de commande est agencé pour déterminer la profondeur de champ du sujet en se basant sur un degré de clarté des images obtenues.

7. Appareil d'affichage selon la revendication 1, dans lequel le dispositif d'obtention d'image (701) comporte par ailleurs des modules d'obtention d'image qui sont mis en œuvre au niveau de différents emplacements pour photographier un environnement ambiant autour du dispositif d'affichage dans au moins l'une parmi une direction avant, une direction arrière, et une direction latérale du dispositif d'affichage.

8. Appareil d'affichage selon la revendication 1, dans lequel le dispositif de commande (705) est agencé pour commander le dispositif d'obtention d'image (701) à des fins de prises de photographies de manière continue ou périodique d'un environnement ambiant de l'appareil d'affichage.

9. Appareil d'affichage selon la revendication 1, dans lequel le dispositif de commande est agencé pour stocker l'image la plus récente sélectionnée comme image d'arrière-plan.

10. Procédé de commande d'un appareil d'affichage, le procédé comportant les étapes consistant à :
photographier l'environnement derrière l'appareil d'affichage ;
stocker les images obtenues ;
sélectionner l'une des images obtenues comme image d'arrière-plan ;
recevoir une entrée d'un effet d'image pour l'image d'arrière-plan ;
traiter l'image d'arrière-plan sélectionnée correspondant à l'effet d'image reçu ; et
afficher l'image d'arrière-plan traitée, comportant par ailleurs les étapes consistant à :
recevoir des informations d'emplacement en cours de l'appareil d'affichage en provenance d'un détecteur d'emplacement (202) en réponse à un changement de l'emplacement de l'appareil d'affichage qui est détecté ou en réponse à une distance entre l'appareil d'affichage et une structure fixe dépassant une valeur prédéfinie ;
obtenir une image la plus récente en réponse à une différence entre les informations d'emplacement en cours et des informations d'emplacement stockées dépassant un seuil prédéterminé ; et
analyser l'image la plus récente, et sélectionner l'image la plus récente comme image d'arrière-plan en réponse à ce qu'il n'y a aucune image stockée ayant une profondeur de champ d'un sujet dans les limites d'une plage prédéterminée qui correspond au résultat d'analyse de l'image la plus récente.

11. Procédé de commande selon la revendication 10, comportant par ailleurs l'étape consistant à :
comparer au moins des données parmi des données d'emplacement de l'appareil d'affichage et des données de qualité d'image de l'image la plus récente par rapport à une condition prédéfinie pour sélectionner l'image la plus récente comme image d'arrière-plan.

12. Procédé de commande selon la revendication 10, dans lequel l'étape consistant à analyser comporte l'étape consistant à :
obtenir des données concernant au moins l'un parmi un emplacement de l'appareil d'affichage, une luminosité de l'environnement ambiant de l'appareil d'affichage, et une profondeur de champ d'un sujet, en utilisant l'image la plus récente.

13. Procédé de commande selon la revendication 10, comportant l'étape consistant à :
changer l'image d'arrière-plan si la profondeur de champ du sujet est changée selon une valeur prédéterminée ou plus.
